# EUROPEAN PATENT SPECIFICATION

(11) **EP 4 092 513 B1**
(45) Date of publication and mention of the grant of the patent: **23.04.2025**
(21) Application number: 21881657.7
(22) Date of filing: 10.08.2021
(51) Int. Cl.: G06F 3/0481

(54) **METHOD AND APPARATUS FOR CONSTRUCTING VIRTUAL ASSEMBLY, AND COMPUTER-READABLE STORAGE MEDIUM**
VERFAHREN UND VORRICHTUNG ZUR HERSTELLUNG EINER VIRTUELLEN ANORDNUNG UND COMPUTERLESBARES SPEICHERMEDIUM
PROCÉDÉ ET APPAREIL DE CONSTRUCTION D'UN ENSEMBLE VIRTUEL, ET SUPPORT DE STOCKAGE LISIBLE PAR ORDINATEUR

(30) Priority: 22.10.2020 CN 202011140700
(43) Date of publication of application: 23.11.2022
(73) Proprietor: BEIJING BYTEDANCE NETWORK TECHNOLOGY CO., LTD., Beijing 100041 (CN)
(72) Inventor: HUANG, Xin, Beijing 100190 (CN); WU, Zhihua, Beijing 100190 (CN); FAN, Jiaqi, Beijing 100190 (CN); WANG, Shentao, Beijing 100190 (CN)
(74) Representative: Dentons UK and Middle East LLP
(86) International application number: PCT/CN2021/111661
(87) International publication number: WO 2022/083238

(56) References cited:
- WO-A1-2019/041900
- CN-A- 101 414 179
- CN-A- 107 346 123
- CN-A- 109 710 069
- CN-A- 112 241 231

## Description

The present application claims the priority to Chinese Patent Application No. 202011140700.2, titled "METHOD AND APPARATUS FOR CONSTRUCTING VIRTUAL ASSEMBLY, AND COMPUTER-READABLE STORAGE MEDIUM", filed with the Chinese Patent Office on October 22, 2020.

### FIELD

The present disclosure relates to the field of computer technology, in particular to a method and apparatus for constructing a virtual assembly and a computer-readable storage medium.

### BACKGROUND

Constructing an assembly through building blocks, cardboards, magnetic sheets and the like is a common entertainment or educational project in people's daily life.

However, due to the limitations of shapes and spaces of the building blocks, cardboards and magnetic sheets, the existing construction of the assembly is limited and has poor flexibility.

In Chinese Application Publication No. CN 109710069 A, a three-dimensional part automatic assembly method for virtual assembly is provided. The method includes: importing all part models of a to-be-assembled mold and part assembly sequence information, and forming a virtual assembly scene; calculating the types of the parts and the number of the combined parts and the number of the non-combined parts; placing all non-combined parts; generating assembly logic and guiding a user to carry out assembly interaction; processing parameter information generated when the computer performs assembly interaction on the mobile parts of the virtual interaction equipment held by the user; guiding a user to perform the next step of assembly until all parts are assembled; and integrating the parameter information generated in each step of assembly into a report according to the assembly sequence, and exporting the report for user reference and subsequent learning adjustment.

In CN 107346123 A, a method for improving the numerical control cutting efficiency is disclosed.

### SUMMARY

The invention is set out in the appended set of claims. In order to solve or at least partially solve the above technical problems, a method and apparatus for constructing a virtual assembly and a computer-readable storage medium are provided according to the present disclosure, which may improve the flexibility of construction of the assembly.

In a first aspect of the present disclosure, a method for constructing a virtual assembly is provided. The method includes:
receiving a cutting operation instruction input by a user on a substrate, wherein the substrate is displayed in an operation region of a user interface, and the cutting operation instruction is used to indicate a cutting path;
displaying the cutting path on the substrate, wherein the substrate is cut into at least two parts by the cutting path;
receiving an assembly instruction input by the user to assemble the at least two parts; and displaying the virtual assembly formed by assembling the at least two parts, wherein the assembly instruction is used to indicate an assembly operation of the parts.

In a possible embodiment, before the receiving the cutting operation instruction input by the user on the substrate, the method further includes:
receiving attribute information of the substrate input by the user on the user interface; and displaying a substrate corresponding to the attribute information in the operation region.

In a possible embodiment, before the receiving the cutting operation instruction input by the user on the substrate, the method further includes:
receiving a cutting start instruction input by the user, wherein the cutting start instruction is used to indicate an execution of the cutting operation.

In a possible embodiment, the receiving the cutting start instruction input by the user includes:
receiving an operation for selecting a cutting function control by the user; or
receiving an operation for selecting a key or key combination corresponding to the cutting start instruction by the user; or
receiving a first operation corresponding to the cutting start instruction input by the user on the user interface, wherein the first operation includes: a click, sliding or an air gesture.

In a possible embodiment, the receiving the cutting operation instruction input by the user on the substrate includes:
receiving click operations by the user on the substrate, and determining a straight line between positions corresponding to two consecutive click operations as the cutting path; or,
receiving a sliding operation of the user on the substrate, and determining a sliding track corresponding to the sliding operation as the cutting path.

**In** a possible embodiment, before the receiving the assembly instruction input by the user, the method further includes:
displaying respective identifications corresponding to the at least two parts.

The displaying respective identifications corresponding to the at least two parts includes:
generating and displaying the identifications corresponding to the parts based on a cut and generation order of the parts.

**In** a possible embodiment, before the receiving the assembly instruction input by the user, the method further includes:
receiving an interface setting operation corresponding to the part input by the user, wherein the interface setting operation includes: setting an installation position and/or setting an interface type.

**In** a possible embodiment, the receiving the interface setting operation corresponding to the part input by the user includes:
receiving an operation for selecting the interface setting control by the user, wherein the interface setting control corresponds to the interface type; and
receiving an adding interface operation input by the user at a first position of the part, and displaying an interface with the interface type corresponding to the interface setting control at the first position.

In a possible embodiment, after the displaying the interface with the interface type corresponding to the interface setting control at the first position, the method further includes:
receiving a first operation by the user on the interface, and moving the interface from the first position to a second position, wherein the first operation is used to indicate a movement of the interface from the first position to the second position; and/or,
receiving a second operation by the user on the interface, and copying the interface to a third position, wherein the second operation is used to indicate a copy of the interface to the third position.

In a possible embodiment, the receiving the assembly instruction input by the user to assemble the at least two parts includes:
receiving an operation for selecting the interface of the part by the user, and performing the assembly operation on the selected interface.

In a possible embodiment, before the performing the assembly operation on the selected interface, the method further includes:
receiving an operation for selecting an assembly function control by the user, wherein the assembly function control is configured to indicate an execution of the assembly operation; or,
determining that a time interval between operations for selecting at least two interfaces is less than a preset threshold.

In a possible embodiment, the method further includes:
receiving a viewing instruction for the virtual assembly input by the user, and displaying the virtual assembly in multiple perspectives in response to the viewing instruction.

In a possible embodiment, before receiving the cutting operation instruction input by the user on the substrate, the method further includes:
receiving a mapping operation of the user on the substrate, and displaying a map on the substrate.

In a second aspect of the present disclosure, an apparatus for constructing a virtual assembly is provided. The apparatus includes: a receiving module and a display module.

The receiving module is configured to receive a cutting operation instruction input by a user on a substrate, wherein the substrate is displayed in an operation region of a user interface, and the cutting operation instruction is used to indicate a cutting path.

The display module is configured to display the cutting path on the substrate, wherein the substrate is cut into at least two parts by the cutting path.

The receiving module is further configured to receive an assembly instruction input by the user, to assemble the at least two parts; and display the virtual assembly formed by assembling the at least two parts, wherein the assembly instruction is used to indicate an assembly operation of the parts.

In a possible embodiment, the receiving module is further configured to receive attribute information of the substrate input by the user on the user interface; and display the substrate corresponding to the attribute information in the operation region.

In a possible embodiment, the receiving module is further configured to receive a cutting start instruction input by the user, wherein the cutting start instruction is used to indicate an execution of the cutting operation.

In a possible embodiment, the receiving module is configured to receive an operation for selecting a cutting function control by the user; or receive an operation for selecting a key or key combination corresponding to the cutting start instruction by the user; or receive a first operation corresponding to the cutting start instruction input by the user on the user interface, wherein the first operation includes: a click, sliding or an air gesture.

In a possible embodiment, the receiving module is configured to receive click operations by the user on the substrate, and determine a straight line between positions corresponding to two consecutive click operations as the cutting path; or receive a sliding operation by the user on the substrate, and determine a sliding track corresponding to the sliding operation as the cutting path.

In a possible embodiment, the display module is further configured to display respective identifications corresponding to the at least two parts.

The display module is further configured to generate and display the identifications corresponding to the parts based on a cut and generation order of the parts.

In a possible embodiment, the receiving module is further configured to receive an interface setting operation corresponding to the part input by the user, wherein the interface setting operation includes: setting an installation position and/or setting an interface type.

In a possible embodiment, the receiving module is configured to receive an operation for selecting an interface setting control by the user, wherein the interface setting control corresponds to the interface type; and receive an adding interface operation input by the user at a first position of the part, and display the interface of the interface type corresponding to the interface setting control at the first position.

In a possible embodiment, the receiving module is further configured to receive a first operation by the user on the interface, and move the interface from the first position to a second position, wherein the first operation is used to indicate a movement of the interface from the first position to the second position; and/or receive a second operation by the user on the interface, and copy the interface to a third position, wherein the second operation is used to indicate a copy of the interface to the third position.

In a possible embodiment, the receiving module is configured to receive an operation for selecting the interface of the part by the user, and perform an assembly operation on the selected interface.

In a possible embodiment, the receiving module is further configured to receive an operation for selecting an assembly function control by the user, wherein the assembly function control is configured to indicate an execution of the assembly operation; or determine that a time interval between operations for selecting at least two interfaces is less than a preset threshold.

In a possible embodiment, the receiving module is further configured to receive the viewing instruction for the virtual assembly input by the user, and the display module is configured to display the virtual assembly in multiple perspectives in response to the viewing instruction.

In a possible embodiment, the receiving module is further configured to receive a mapping operation of the user on the substrate to display a map on the substrate.

An electronic device is provided in a third aspect of the present disclosure. The electronic device includes: a processor configured to execute a computer program stored in a memory, wherein the computer program, when executed by the processor, implements any embodiment of the method for constructing the virtual assembly according to any embodiment of the present application.

A computer-readable storage medium storing a computer program thereon is provided in a fourth aspect of the present disclosure. The computer program, when executed by a processor, implements any embodiment of the method for constructing the virtual assembly according to any embodiment of the present application.

Compared with the conventional technology, the technical solution according to the embodiment of the present disclosure has the following advantages:

In the technical solution according to the embodiments of the present application, the cutting operation instruction input by the user on the substrate is received, the cutting path indicated by the cutting operation instruction is displayed on the substrate, and the substrate is cut into at least two parts; and the at least two parts are assembled by receiving the assembly instruction input by the user, and the virtual assembly formed by the assembly is displayed. Since the parts are determined based on the cutting path indicated by the cutting operation instruction input by the user, "the parts" involved in the present application are not limited by materials or shapes, which improve user experience. In addition, since the virtual assembly is generated based on "the parts" above and the assembly instruction input by the user, the virtual assembly is not limited by materials, parts or space and the like, which improves the virtual assembly flexible and the user experience.

### BRIEF DESCRIPTION OF THE DRAWINGS

The drawings herein are incorporated into the specification and constitute a part of the specification. The drawings show embodiments of the present disclosure. The drawings and the specification are used to explain the principle of the present disclosure.

In order to more clearly explain the embodiments of the present disclosure or the technical solutions in the conventional art, the drawings used in the description of the embodiments or the conventional art are briefly introduced below. Apparently, for those skilled in the art, other drawings may be obtained according to the provided drawings without any creative effort.
Figure 1 is a schematic flowchart of an embodiment of a method for constructing a virtual assembly according to the present disclosure;
Figure 2 is a schematic diagram of a user interface according to the present disclosure;
Figure 3 is a schematic diagram of another user interface according to the present disclosure;
Figure 4 is a schematic diagram of another user interface according to the present disclosure;
Figure 5 is a schematic diagram of another user interface according to the present disclosure;
Figure 6 is a schematic diagram of another user interface according to the present disclosure;
Figure 7 is a schematic diagram of another user interface according to the present disclosure;
Figure 8 is a schematic diagram of another user interface according to the present disclosure;
Figure 9 is a schematic diagram of another user interface according to the present disclosure;
Figure 10 is a schematic diagram of another user interface according to the present disclosure;
Figure 11 is a schematic diagram of another user interface according to the present disclosure;
Figure 12 is a schematic diagram of another user interface according to the present disclosure;
Figure 13 is a schematic diagram of another user interface according to the present disclosure;
Figure 14 is a schematic diagram of another user interface according to the present disclosure;
Figure 15 is a schematic flowchart of another embodiment of a method for constructing a virtual assembly according to the present disclosure;
Figure 16 is a schematic flowchart of another embodiment of a method for constructing a virtual assembly according to the present disclosure;
Figure 17 is a schematic diagram of a user interface according to the present disclosure;
Figure 18 is a schematic diagram of another user interface according to the present disclosure;
Figure 19 is a schematic diagram of another user interface according to the present disclosure;
Figure 20 is a schematic diagram of another user interface according to the present disclosure;
Figure 21 is a schematic diagram of another user interface according to the present disclosure;
Figure 22 is a schematic diagram of another user interface according to the present disclosure;
Figure 23 is a schematic diagram of another user interface according to the present disclosure;
Figure 24 is a schematic diagram of another user interface according to the present disclosure;
Figure 25 is a schematic diagram of another user interface according to the present disclosure;
Figure 26 is a schematic diagram of another user interface according to the present disclosure;
Figure 27 is a schematic diagram of another user interface according to the present disclosure;
Figure 28 is a schematic diagram of another user interface according to the present disclosure;
Figure 29 is a schematic diagram of another user interface according to the present disclosure;
Figure 30 is a schematic diagram of another user interface according to the present disclosure;
Figure 31 is a schematic diagram of another user interface according to the present disclosure;
Figure 32 is a schematic structural diagram of an apparatus for constructing a virtual assembly according to the present disclosure;
Figure 33 is a schematic structural diagram of an electronic device according to the present disclosure.

### DETAILED DESCRIPTION

In order to make the above purposes, features, and advantage of the present disclosure more apparent and easy to understand, the technical solutions in the embodiments of the present disclosure will be described clearly and completely hereinafter. It should be noted that the embodiments of the present disclosure and the features in the embodiments may be combined with each other in the case of no conflict.

In the following detailed description, numerous specific details are set forth in order to provide thorough understanding of the present disclosure. However, the present disclosure may also be implemented in other ways different from those described here. Obviously, the embodiments in the specification are only a part of the embodiments of the present disclosure, rather than all the embodiments.

A method for constructing a virtual assembly according to the present disclosure may be applied to an electronic device, which may be a computer, a tablet, a mobile phone or other intelligent terminal devices and the like. The electronic device has a display screen, which may be a touch screen or a non-touch screen. For the electronic device with the touch screen, an interactive operation with the electronic device may be realized through a gesture, a finger or a touch tool, such as, a stylus. For the electronic device with a non-touch screen, an interactive operation with the electronic device may be realized through an external device, such as, a mouse, a keyboard, a camera; or voice recognition or expression recognition and the like.

A user interface displayed by the electronic device includes an operation region. In a possible embodiment, the user interface may further include: a function region.

The operation region is used to perform an operation of assembly construction by the user in this region.

The function region contains controls, option boxes and/or input boxes with multiple functions.

The function region may always be displayed in a certain region, for example, the upper side, the left side, the right side, or the lower side, of the user interface.

The function region may have a moving function. For example, the user may move a display position of the function region on the user interface based on his habit, which is convenient for the operation of assembly construction by the user.

The function region may have a hidden function or a telescopic function. The hidden function refers to that the function region is hidden on the user interface when a hidden condition is met and the function region is displayed on the user interface when a display condition is met. The hidden condition or the display condition may be triggered by the user actively. For example, the function region is displayed when the user clicks a right key in a blank region and the function region is hidden when the user clicks the right key again. Alternatively, the hidden condition or the display condition may be triggered automatically when a preset condition is met. For example, the function region is hidden automatically after a certain function control is selected by the user in the function region. The telescopic function is similar to the hidden function. In the telescopic function, a telescopic icon is displayed on the user interface. A display state of the function region may be switched by operating the telescopic icon by the user. For example, the telescopic icon may be an arrow, and the display state of the function region may be switched by clicking the arrow. If the function region is in a collapsed state currently, the function region is expanded by clicking the arrow; and if the function region in an expanded state currently, the function region is collapsed by clicking the arrow. Due to the limited screen size of the electronic device, the maximum operation space of the operation region may be expanded through the hidden function or the telescopic function of the function region, which is convenient for the user to operate and improves the user experience.

The technical solution of the present disclosure is described below with several embodiments, in which the same or similar concepts may be referred to each other and are not repeated herein.

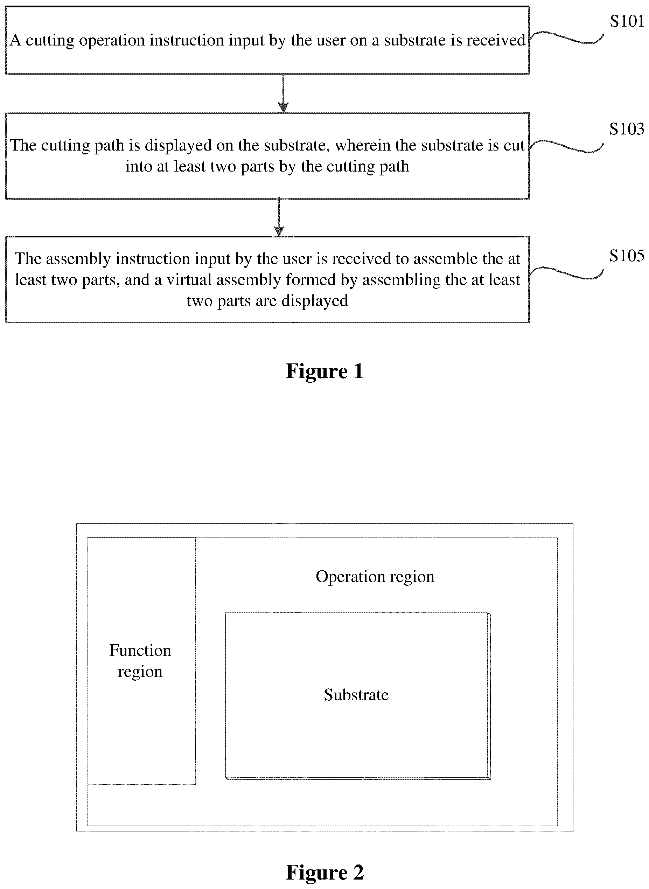

Figure 1 is a schematic flowchart of an embodiment of a method for constructing a virtual assembly according to the present disclosure. As shown in Figure 1, the method of this embodiment is as follows.

In S101, a cutting operation instruction input by the user on a substrate is received.

The substrate is displayed in the operation region of the user interface, and the cutting operation instruction is used to indicate a cutting path.

In a possible embodiment, in one case, the substrate is displayed in the operation region in an initial state, as shown in Figure 2. The substrate is displayed in the operation region of the user interface when the user opens the user interface for constructing the virtual assembly. Figure 2 is a schematic diagram of a user interface according to the present disclosure.

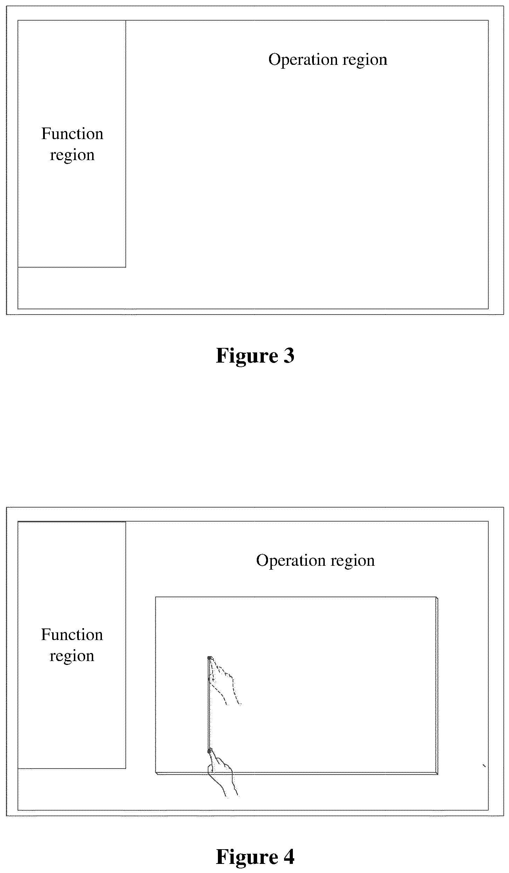

In another case, the user inputs attribute information of a substrate on the user interface, and the substrate corresponding to the attribute information is displayed in the operation region based on the attribute information of the substrate input by the user. That is, when the user opens the user interface for constructing the virtual assembly, the operation region of the user interface is blank, as shown in Figure 3. After the user inputs the attribute information of the substrate on the user interface, the substrate corresponding to the attribute information is displayed in the operation region. Figure 3 is a schematic diagram of another user interface according to the present disclosure.

The reception of the cutting operation instruction input by the user on the substrate includes but is not limited to the following possible implementations.

In a possible implementation, the cutting path is input by the user through click operations on the substrate. A straight line between positions corresponding to two consecutive click operations is the cutting path. The electronic device receives the click operations of the user on the substrate, and determines the straight line between the positions corresponding to the two consecutive click operations as the cutting path, as shown in Figure 4. For the touch screen, the click operation may be realized by a finger (for example, a finger pulp or a knuckle), a touch tool (for example, a stylus), an air gesture (for example, a certain part of the finger approaching the screen from far away in a direction perpendicular to the screen) and the like. For the non-touch screen, the click operation may be realized by a click of a mouse or a keyboard (for example, clicking the Enter key at a specific position) and the like. Figure 4 is a schematic diagram of another user interface according to the present disclosure.

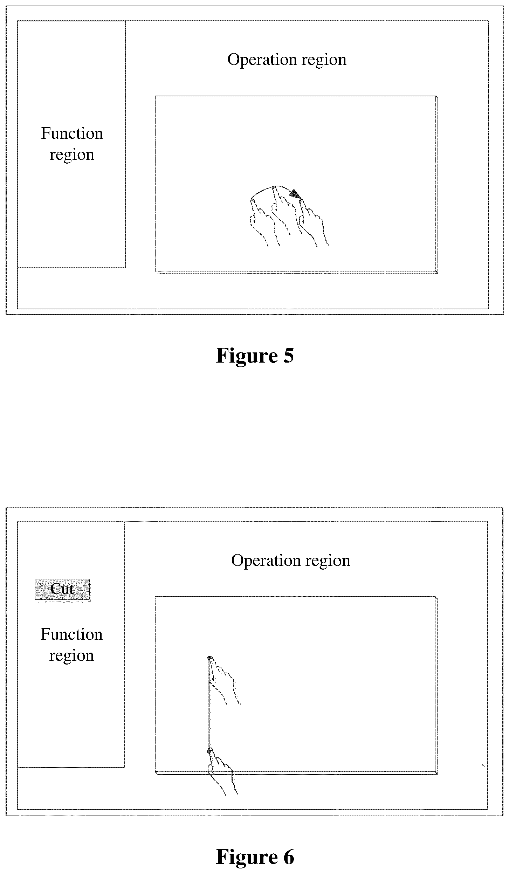

In another possible implementation, the cutting path is input by the user through a sliding operation on the substrate. A sliding track corresponding to the sliding operation is the cutting path. The electronic device receives the sliding operation of the user on the substrate and determines that the sliding track corresponding to the sliding operation is the cutting path (as shown in Figure 5). For the touch screen, the sliding operation may be realized by sliding of a finger (e.g., sliding of a finger pulp or a knuckle), sliding of a touch tool (e.g., sliding of a stylus), sliding of air gesture (e.g., a certain part of the finger sliding above the screen) and the like. For the non-touch screen, the sliding operation may be realized by the mouse (for example, continuously pressing and sliding the mouse) or the keyboard (for example, continuously pressing a direction key to slide) and the like. In a possible embodiment, when the sliding operation is realized through the air gesture, a projection track of the sliding track of the air gesture on the substrate may be determined as the cutting path. Figure 5 is a schematic diagram of another user interface according to the present disclosure.

In a possible embodiment, before receiving the cutting operation instruction input by the user on the substrate, it may further include: receiving a cutting start instruction input by the user. The cutting start instruction is used to instruct an execution of the cutting operation. The electronic device detects the cutting operation instruction input by the user to execute the cutting operation according to the cutting path, after detecting the cutting start instruction.

The way for inputting the cutting start instruction by the user includes, but is not limited to, the following possible implementations.

In a possible implementation, an operation for selecting a cutting function control by the user is received. The cutting function control is displayed in the function region of the user interface (as shown in Figure 6). The user selects the cutting function control by clicking to indicate the execution of the cutting operation. Figure 6 is a schematic diagram of another user interface according to the present disclosure.

In another possible implementation, an operation for selecting a key or combination key corresponding to the cutting start instruction by the user is received. For example, the cutting start instruction is triggered by clicking "C" and "T" keys at the same time. For example, the cutting start instruction is triggered by double clicking the left mouse button on the substrate.

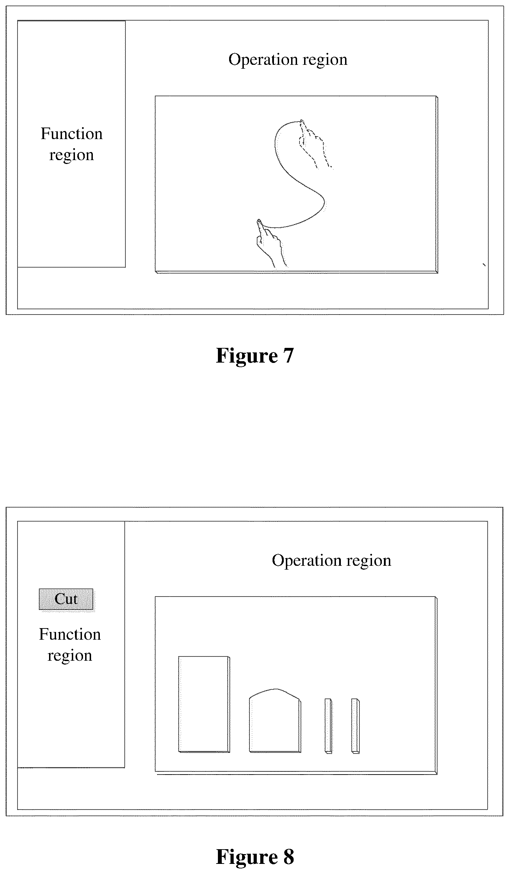

In another possible implementation, a first operation corresponding to the cutting start instruction input by the user on the user interface is received. The first operation includes: click, slide or air gesture and the like. For example, a triple click by the user on the substrate is equivalent to inputting the cutting start instruction. The triple click should meet certain conditions (for example, a triple click completed within 1 second). For another example, an "s" track by the user sliding on the substrate is equivalent to inputting the cutting start instruction (as shown in Figure 7). For another example, inputting an air gesture "X" by the user is equivalent to inputting the cutting start instruction. Figure 7 is a schematic diagram of another user interface according to the present disclosure.

In S103, the cutting path is displayed on the substrate, wherein the substrate is cut into at least two parts by the cutting path.

The cutting path is displayed on the substrate. The cutting path may be displayed distinctively. For example, the cutting path seems to be cut from the substrate visually. The substrate is cut into at least two mutually independent parts through the cutting path (as shown in Figure 8). Figure 8 is a schematic diagram of another user interface according to the present disclosure.

In S105, the assembly instruction input by the user is received to assemble the at least two parts, and a virtual assembly formed by assembling the at least two parts are displayed.

The assembly instruction is used to indicate an assembly operation on the parts.

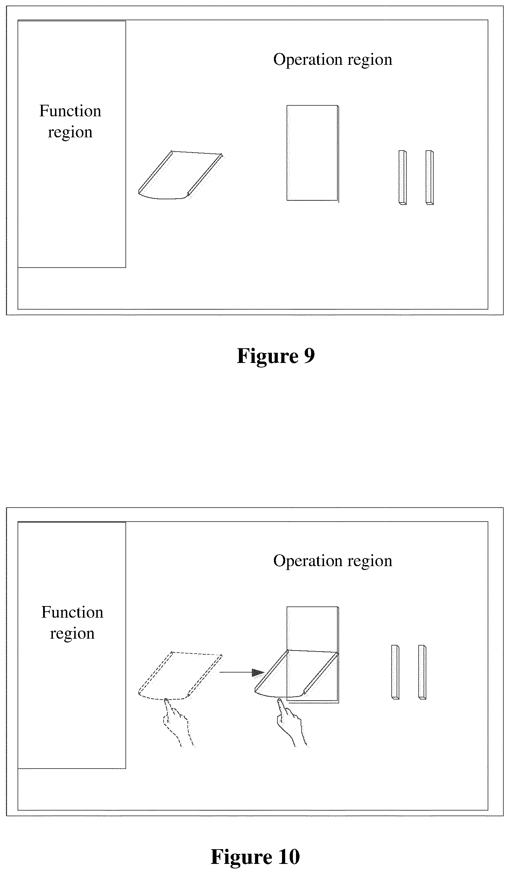

In a possible implementation, the user may select a first part in a first posture and a second part in a second posture (as shown in Figure 9) for assembly. The user may drag the first part to attach the first part to the second part at least one point, and the first part and the second part are assembled together based on the attachment point (as shown in Figure 10). A posture of a part may be adjusted based on a posture adjustment instruction. For example, a certain position of the part is clicked to rotate or move the part to adjust the posture. In this process, the assembly instruction includes a part selection operation, a part movement operation and an assembly operation. In a possible embodiment, the assembly instruction may further include: a posture adjustment operation for a part. Figure 9 is a schematic diagram of another user interface according to the present disclosure, and Figure 10 is a schematic diagram of another user interface according to the present disclosure.

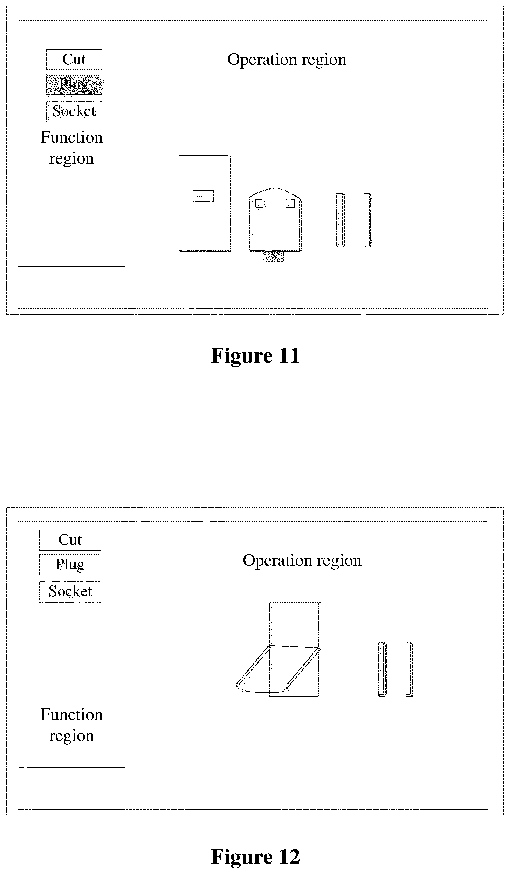

In another possible implementation, a connector may be set on the part. The connector may be a plug or a socket (as shown in Figure 11). The user may select the connector to be assembled. In addition, an operation for selecting the connector of the part by the user may be received, and the assembly operation is performed on the selected connector. The assemble operation may include: the two parts being assembled by assembling connectors together (as shown in Figure 12). Figure 11 is a schematic diagram of another user interface according to the present disclosure, and Figure 12 is a schematic diagram of another user interface according to the present disclosure.

For example, the user may select an assembly function control in the function region, and then select a pair of plug and socket. The electronic device detects the plug and socket selected by the user, and inserts the plug into the socket along an insertion direction of the plug, thereby assembling the parts provided with the plug and the socket.

In a possible embodiment, a relative position of the two parts for insertion may also be adjusted. For example, the relative position of the two parts may be adjusted by clicking. For example, insertion is performed in a first relative position by clicking once, insertion is performed in a second relative position by clicking second time, insertion is performed in a third relative position by clicking third time, and insertion is performed in a fourth relative position by clicking fourth time.

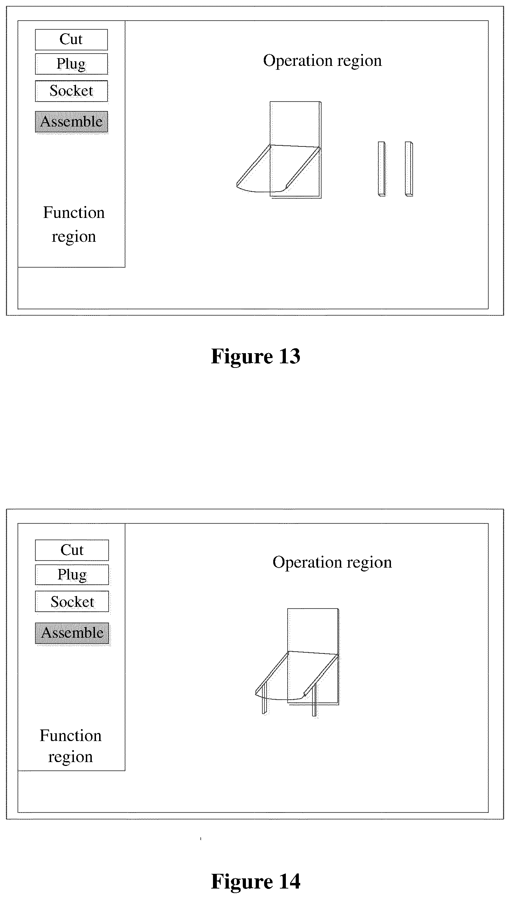

In a possible embodiment, before performing the assembly operation on the selected interface, the method may further include: receiving an operation for selecting the assembly function control. The assembly function control is configured to indicate an execution of the assembly operation, and the assembly function control is displayed in the function region (as shown in Figure 13). It can be seen that, by displaying the assembly function control, the operation on the user interface is more intuitive and easy to understand, so as to improve the operability and friendliness of the interface. Alternatively, a time interval between operations for selecting at least two interfaces is determined to be less than a preset threshold. For example, an operation of quick clicking two interfaces represents that the assembly operation is performed on the two interfaces. For example, the preset threshold is 1 second, and the assembly operation is performed between the interfaces clicked within 1 second. When the time interval between operations for successively selecting two interfaces is greater than or equal to the preset threshold, other operations are performed, rather than the assembly operation. In this way, the assembly function control is not required to display on the user interface, which may make the user interface more concise. Figure 13 is a schematic diagram of another user interface according to the present disclosure.

The virtual assembly formed after all parts are assembled is as shown in Figure 14, and Figure 14 is a schematic diagram of another user interface according to the present disclosure.

Based on the contents of the technical solutions of the present application introduced above, in the present application, the cutting operation instruction input by the user on the substrate is received, the cutting path indicated by the cutting operation instruction may be displayed on the substrate, and the substrate is cut into at least two parts; and the at least two parts are assembled by receiving the assembly instruction input by the user, and the virtual assembly formed by the assembly is displayed. Since the parts are determined based on the cutting path indicated by the cutting operation instruction input by the user, "the parts" involved in the present application are not limited by materials or shapes, which improve user experience. In addition, since the virtual assembly is generated based on "the parts" above and the assembly instruction input by the user, the virtual assembly is not limited by materials, parts or space and the like, which improves the virtual assembly flexible and the user experience.

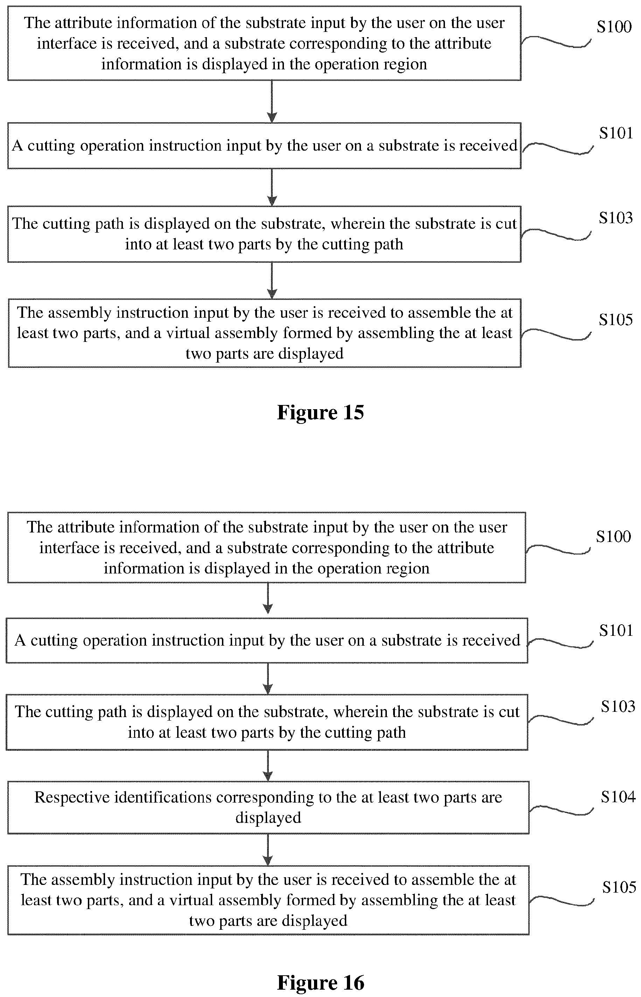

Figure 15 is a schematic flowchart of another embodiment of a method for constructing a virtual assembly according to the present disclosure. Based on the embodiment shown in Figure 1, before S101, a possible implementation in Figure 15 further includes S100.

In S100, the attribute information of the substrate input by the user on the user interface is received, and a substrate corresponding to the attribute information is displayed in the operation region.

The attribute information of the substrate includes, but is not limited to, a shape, a size and/or a display attribute of the substrate.

The shape of the substrate includes, but is not limited to: rectangular, circular, oval, diamond or irregular shape and the like.

The specific parameters of the size of the substrate may be determined according to the shape of the substrate. For example, if the substrate is rectangular, the parameters of the size may include: length, width and thickness. If the substrate is circular, the parameters of the size may include: radius and thickness.

The display attribute of the substrate includes, but is not limited to, the color, transparency and/or texture of the substrate. The display attribute of the substrate may be customized; or be determined based on material of the substrate selected by the user. Different materials have different display attributes, and each material may have one or more colors, transparency and textures. The display attributes corresponding to the materials may be set to default values. For example, the default values of the display attributes of metal are: silver color, transparency being 0, and smooth texture. The default values of the display attributes of plastic are: green color, transparency being 5, and smooth texture. The default values of the display attributes of the cardboard are: yellow color, transparency being 0, and twill texture.

The user may input the attribute information of the substrate through but not limited to the following possible implementation.

### 1. Shape of substrate

A shape selection window of the substrate may be displayed in the function region, and various optional shapes may be displayed in the shape selection window. Alternatively, a shape selection menu of the substrate may be displayed in the function region, and various optional shapes of the substrate may be selected by expanding the shape selection menu, as long as an option being able to display the shape of the substrate is selected by the user, which is not limited in the present disclosure. The option for the shape of the substrate may be displayed in a graphic style or a text style, which is not limited in the present disclosure.

The electronic device receives a shape selection instruction input by the user to determine the shape of the substrate, where the shape selection instruction is used to indicate the shape of the substrate selected by the user.

The user may select a shape by a mouse click to trigger the shape selection instruction. The user may also select a shape by pressing a key or a key combination on the keyboard to trigger the shape selection instruction. For the electronic device with a touch screen, the user may also select a shape through a finger click, a specific gesture, an air gesture or a touch tool to trigger the shape selection instruction.

### 2. Size of substrate

In one way, after the shape of the substrate is determined, a parameter input window corresponding to the shape may be displayed. For example, after the user selects a rectangle, the parameter input window corresponding to the rectangle is displayed. The parameter input window includes input boxes for length, width and thickness. The user may input customized parameter values. In a possible embodiment, a default value may be displayed in the parameter input window. The user may modify the default value to input a customized parameter value, or the user may directly confirm the size of the substrate according to the default value without modifying the default value.

The electronic device receives parameters of the size of the substrate input by the user to determine the size of the substrate.

In another way, after a shape of the substrate is determined, the shape of the substrate may be displayed in the operation region. The user may trigger a size adjustment instruction to adjust the size of the substrate through the operation on the mouse and/or the keyboard. For the electronic device with a touch screen, the user may also trigger the size adjustment instruction to adjust the size of the substrate through sliding of a finger, a specific gesture, an air gesture or a touch tool.

The electronic device receives the size adjustment instruction input by the user and determines the size of the substrate.

### 3. Display attributes of substrate

In an implementation, the parameter input window for the display attributes may be displayed in the function region. The parameter of each display attribute may correspond to one or more options. The user may select the parameter of each option through the mouse and/or the keyboard. For example, the color is selected by the mouse click, the transparency is selected by dragging the mouse, and the texture is selected by the mouse click, etc. Alternatively, the color is selected through the up, down, left, right and Enter keys of the keyboard; the transparency is selected through the left and right keys of the keyboard, and the texture is selected through the up, down and Enter keys of the mouse. For the electronic device with a touch screen, the user may select the parameter of each option through a finger click, sliding, a specific gesture, an air gesture or a touch tool.

The electronic device receives the parameters of the display attributes input by the user and determines the display attributes of the substrate.

In another implementation, an option of the material of the substrate may be displayed, and the user may select the material through the mouse and/or the keyboard. For the electronic device with a touch screen, the user may select the material of the substrate through a finger click, sliding, a specific gesture, an air gesture or a touch tool.

The electronic device determines the display attributes of the substrate corresponding to the material, based on the material selection instruction by the user.

In the above embodiments, the attribute information of the substrate input by the user on the user interface is received, and the substrate corresponding to the attribute information is displayed in the operation region based on the attribute information. Since the attribute information is customized by the user, the substrate may be set flexibly, thereby making the virtual assembly based on substrate cutting and assembly more diverse and further improving the user experience.

Figure 16 is a schematic flowchart of another embodiment of a method for constructing a virtual assembly according to the present disclosure. On the basis of the above embodiments, in a possible embodiment, before S105, the method may further include:

In S104, respective identifications corresponding to the at least two parts are displayed.

It is convenient for the user to operate the parts by identifying the parts, so as to improve the user experience.

The identifications corresponding to the parts are generated and displayed based on a cut and generation order of the parts.

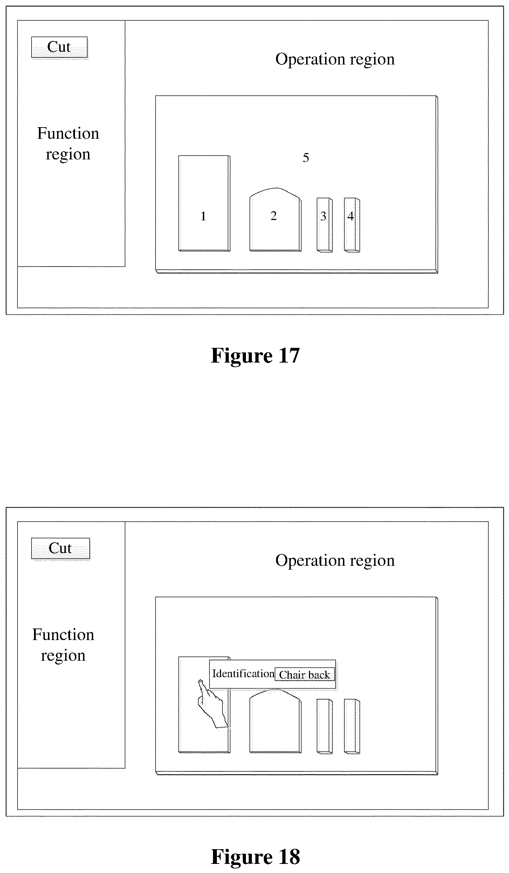

For example, the identification may be a number. For example, the numbers may be 1, 2, 3 and 4 respectively, as shown in Figure 17. According to a cut and generation order of the parts, the parts are automatically identified to improve the efficiency of part identification. Figure 17 is a schematic diagram of a user interface according to the present disclosure.

In another way, a customized identification interface may be provided for the user and the identification corresponding to the part input by the user in the identification interface are received and displayed. By providing the user with the customized identification interface, the flexibility of identification may be improved.

For example, if the user clicks the right key on a part, the identification interface is displayed. The identification interface may include, but not be limited to, a part identification input box. The user may input the identification corresponding to the part in the part identification input box. The identification corresponding to the part may be input by text editing or by selecting from multiple options (as shown in Figure 18). Figure 18 is a schematic diagram of another user interface according to the present disclosure.

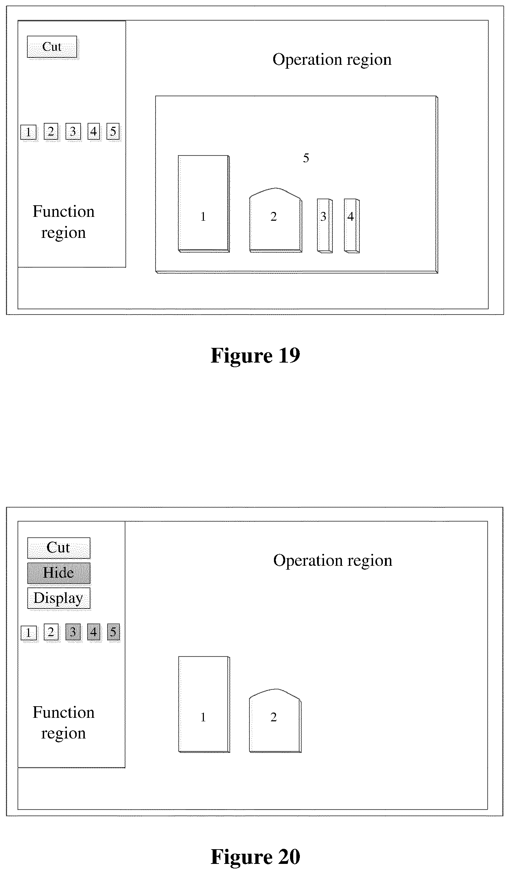

The identification information may be displayed on the part, and the identification of the cut part may also be displayed in the function region (as shown in Figure 19). Figure 19 is a schematic diagram of another user interface according to the present disclosure.

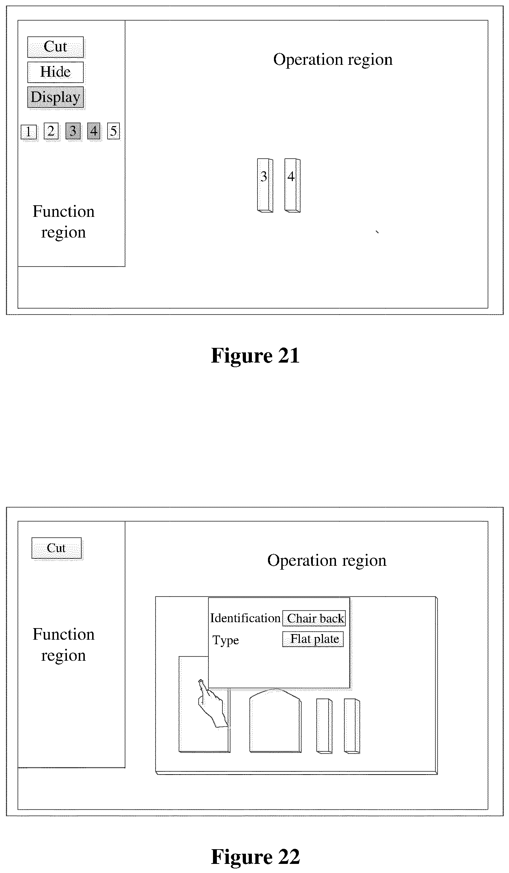

In a possible embodiment, a part display function or a part hiding function is further provided on the user interface. For example, a hidden control and a display control may be displayed in the function region. Based on the identification corresponding to the part selected by the user, the part corresponding to the identification is displayed or hidden in the operation region. For example, the user may select one or more identifications corresponding to the parts to be hidden, and click the hidden control. In this way, the parts corresponding to these identifications are hidden in the operation region. For example, as shown in Figure 20, the parts corresponding to identifications 3, 4 and 5 are hidden. Similarly, the user may select one or more identifications corresponding to the parts to be displayed, and click the display control. In this way, the parts corresponding to these identifications are displayed in the operation region. As shown in Figure 21, the parts corresponding to identifications 3 and 4 are displayed. Figure 20 is a schematic diagram of another user interface according to the present disclosure, and Figure 21 is a schematic diagram of another user interface according to the present disclosure.

In a possible embodiment, the part type may also be set. For example, on the basis of Figure 18, a part type input box may be displayed in the identification interface. The part type may be input by text editing or by selecting from multiple options. For example, as shown in Figure 22, the part type may be set based on the part type input by the user in the identification interface. Figure 22 is a schematic diagram of another user interface according to the present disclosure.

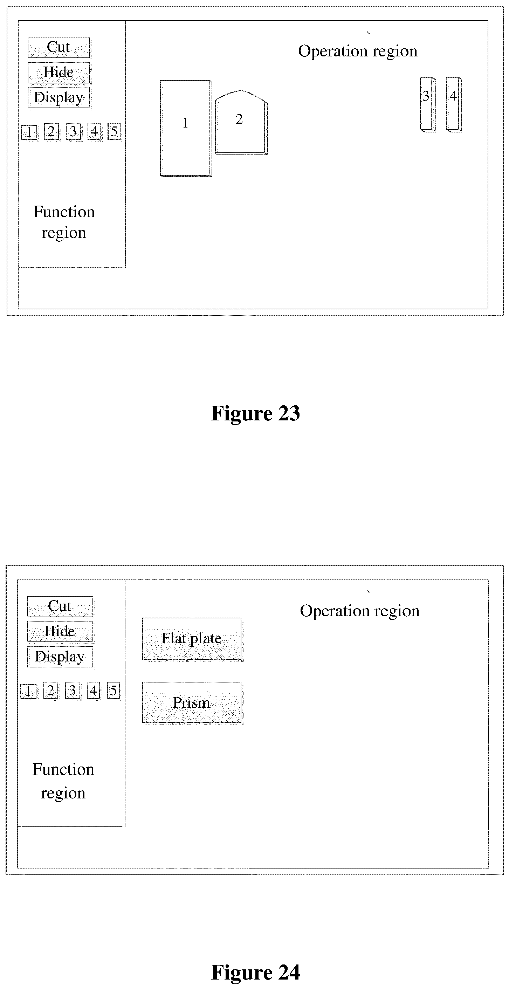

In a possible embodiment, the cut parts may be moved in the operation region, so that the user may store some parts in a centralized manner according to requirements. For example, the user may store one type of parts in one region and store another type of parts in another region through the mouse. For example, the plate-shaped parts are placed in one region, that is, the parts marked as chair back and seat plate are placed in one region. The parts marked as chair legs are placed in another region (as shown in Figure 23). The parts are moved according to a moving operation instruction of the user. The user may select a part through the mouse and/or the keyboard and the moving operation instruction is triggered to move the part. For the electronic device with the touch screen, a part may be selected and the moving operation instruction is triggered to move the part, through touch control. By moving the parts, it is more convenient for the user to assemble the parts. Figure 23 is a schematic diagram of another user interface according to the present disclosure.

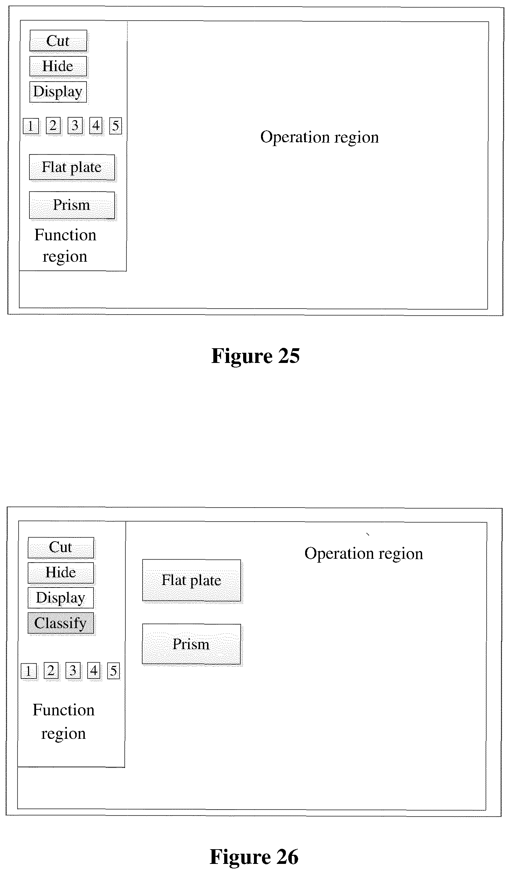

In a possible embodiment, multiple parts may also be stored in a classified manner in corresponding folders. The folders may be created by the user or automatically generated based on part types. By storing parts in a classified manner, it is convenient for the user to find parts, so as to improve the part assembly efficiency and user experience. The folders may be displayed in the operation region (as shown in Figure 24), or may be displayed in the function region (as shown in Figure 25), which is not limited in the present disclosure. Figure 24 is a schematic diagram of another user interface according to the present disclosure, and Figure 25 is a schematic diagram of another user interface according to the present disclosure.

In an implementation, a classification control is displayed in the function region. By selecting the classification control by the user(as shown in Figure 26), the electronic device stores the parts in the corresponding folder based on the part type after detecting that the user selects the classification control. In this way, the parts are automatically classified. The automatic classification of parts based on the part type may improve the classification efficiency and further improve the assembly efficiency. Figure 26 is a schematic diagram of another user interface according to the present disclosure.

In another implementation, the user may trigger the moving operation instruction by dragging the parts and place the parts in the corresponding folder. The electronic device stores the parts in the corresponding folder according to the moving operation instructions of the user for the parts. The parts are stored in a classified manner by dragging the parts, which improves flexibility of classification.

In a possible embodiment, an interface may be set on the parts of the present disclosure to facilitate the assembly of the parts. The interface of the parts may be set after the parts are cut from the substrate, either before or after identifying the parts and classifying the parts, or between identifying the parts and classifying the parts, which is not limited in the present disclosure.

An interface setting operation corresponding to the parts input by the user is received. The interface setting operation includes: setting an installation position and/or setting an interface type. The interface type may be a plug or a socket. The plug and the socket are matched with each other. For example, the plug is a protrusion, and the socket is a groove matching the protrusion. The parts are spliced through the insertion of the plug and the socket.

By setting the plug and the socket on the parts, the user is provided with a simple and direct way to splice the parts. When two parts are spliced, the relative position and orientation of the two parts to be spliced are determined through the plug and the socket without translating and/or rotating the whole part, which improves the simplicity of a splicing operation and the user experience.

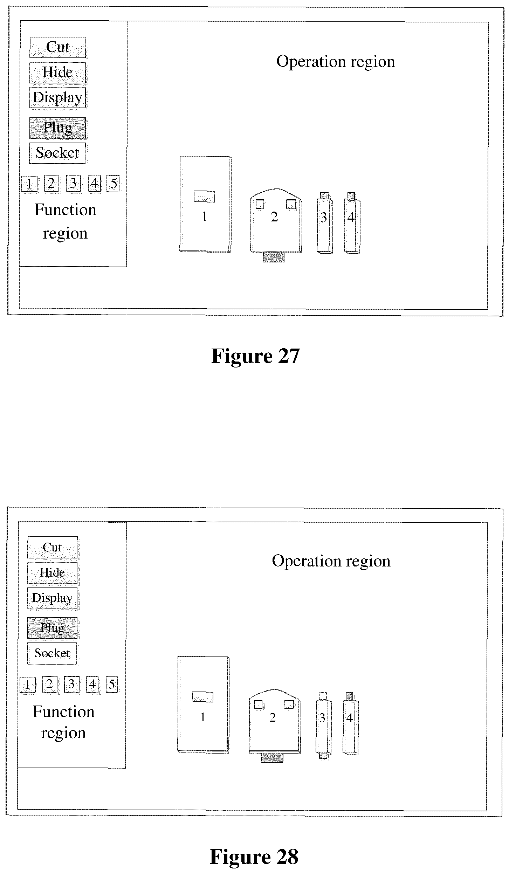

In a possible embodiment, an interface setting control may be displayed in the function region. The interface setting control may be, for example, a plug control and a socket control (as shown in Figure 27). The plug control and the socket control are mutually matched. Correspondingly, the socket and plug are also mutually matched. Figure 27 is a schematic diagram of another user interface according to the present disclosure.

The user selects the interface setting control. An operation for selecting the interface setting control by the user is received. The interface setting control may be the plug control or the socket control. The user selects an installation position of the interface on the part after selecting the interface setting control. An adding interface operation input by the user at a first position of the part is received. For example, if the user clicks at the first position of the part, it means that the adding interface operation is input at the first position. The interface of the interface type corresponding to the interface setting control is displayed at the first position. For example, if the user selects the plug control, the plug is added at the installation position; and if the user selects the socket control, the socket is added at the installation position. The plug further has a plugging direction.

The shape of the interface may be drawn by the user, or a target plug may be selected from a preset interface library. If the shape of the interface is selected, the added interface has a corresponding shape.

In a possible embodiment, the above interface may be moved. That is, if the user needs to adjust the position of the interface, the position of the interface may be moved. A first operation of the user on the interface is received. For example, the user may move the interface from a first position to a second position. The first operation is used to indicate to move the interface from the first position to the second position. For example, as shown in Figure 28, the plug on the part with identification 3 may be moved from one end to the other end. In this way, the flexibility of interface installation may be improved. Figure 28 is a schematic diagram of another user interface according to the present disclosure.

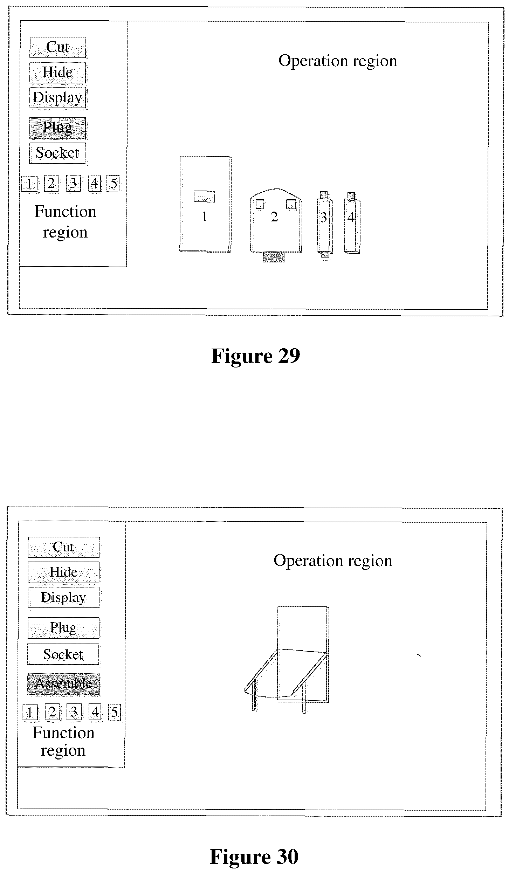

In a possible embodiment, the above interface may be copied. That is, an interface of the same type may be added in other places by copying the added interface. A second operation of the user on the interface is received. The second operation is used to indicate that the interface is copied to a third position. For example, as shown in Figure 29, the plug of the part with identification 3 may be copied and set on the other end of the part, which may improve the efficiency of adding the interface. Figure 29 is a schematic diagram of another user interface according to the present disclosure.

A schematic structural diagram of all parts after assembly is shown in Figure 30. Figure 30 is a schematic diagram of a user interface according to the present disclosure.

In a possible embodiment, in the assembly process or after assembly is completed, a viewing instruction for the virtual assembly input by the user may be received, and the virtual assembly is displayed in multiple perspectives according to the viewing instruction input by the user, for example, closing in, pulling back, rotating, zooming in or zooming out, etc.. For example, different viewing instructions may be input through the combination of the mouse and the keyboard.

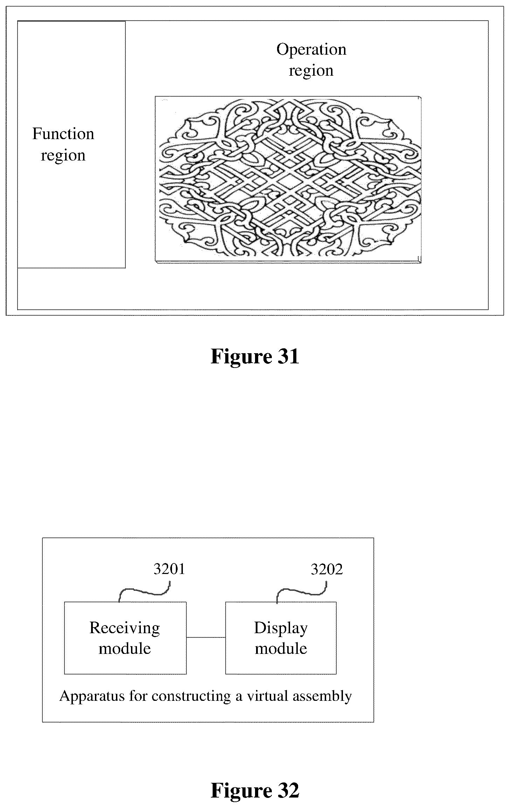

In a possible embodiment, before S101, the method may further include: receiving a mapping operation of the user on the substrate and displaying a map on the substrate (as shown in Figure 31). Figure 31 is a schematic diagram of another user interface according to the present disclosure.

The map may be selected from a preset database, or external pictures may be loaded through links, which is not limited in the present disclosure.

The method for constructing the virtual assembly in the present disclosure may be applied to an independent application, or integrated into other applications as a functional module of other applications, or installed in other applications as a plug-in of other applications according to user demands.

Figure 32 is a schematic structural diagram of an apparatus for constructing a virtual assembly according to the present disclosure. The apparatus according to an embodiment includes a receiving module 3201 and a display module 3202.

The receiving module 3201 is configured to receive a cutting operation instruction input by a user on a substrate, wherein the substrate is displayed in an operation region of a user interface, and the cutting operation instruction is used to indicate a cutting path.

The display module 3202 is configured to display the cutting path on the substrate, wherein the substrate is cut into at least two parts by the cutting path.

The receiving module 3201 is further configured to receive an assembly instruction input by the user to assemble the at least two part, and display a virtual assembly formed by assembling the at least two parts, wherein the assembly instruction is used to indicate an assembly operation on the parts.

In a possible embodiment, the receiving module 3201 is further configured to receive attribute information of the substrate input by the user on the user interface; and display the substrate corresponding to the attribute information in the operation region.

In a possible embodiment, the receiving module 3201 is further configured to receive a cutting start instruction input by the user, wherein the cutting start instruction is used to indicate an execution of the cutting operation.

In a possible embodiment, the receiving module 3201 is configured to receive an operation for selecting a cutting function control by the user; or receive an operation for a key or key combination corresponding to the cutting start instruction by the use; or receive a first operation corresponding to the cutting start instruction input by the user on the user interface, where the first operation includes: a click, sliding or an air gesture.

In a possible embodiment, the receiving module 3201 is configured to receive click operations by the user on the substrate, and determine a straight line between positions corresponding to two consecutive click operations as the cutting path; or receive a sliding operation by the user on the substrate, and determine a sliding track corresponding to the sliding operation as the cutting path.

In a possible embodiment, the display module 3202 is further configured to display respective identifications corresponding to the at least two parts.

In a possible embodiment, the display module 3202 is further configured to generate and display the identifications corresponding to the parts based on a cut and generation order of the parts.

In a possible embodiment, the receiving module 3201 is further configured to receive an interface setting operation corresponding to the part input by the user, wherein the interface setting operation includes: setting an installation position and/or setting an interface type.

In a possible embodiment, the receiving module 3201 is configured to receive an operation for selecting an interface setting control by the user, wherein the interface setting control corresponds to the interface type; and receive an adding interface operation input by the user at a first position of the part, and display the interface of the interface type corresponding to the interface setting control at the first position.

In a possible embodiment, the receiving module 3201 is further configured to receive a first operation by the user on the interface, and move the interface from the first position to a second position, wherein the first operation is used to indicate a movement of the interface from the first position to the second position; and/or receive a second operation of the user on the interface, and copy the interface to a third position, wherein the second operation is used to instruct a copy of the interface to the third position.

In a possible embodiment, the receiving module 3201 is configured to receive an operation for selecting the interface of the parts by the user and perform an assembly operation on the selected interface.

In a possible embodiment, the receiving module 3201 is further configured to receive an operation for selecting an assembly function control by the user, where the assembly function control is configured to indicate an execution of the assembly operation; or determine that a time interval between operations for selecting at least two interfaces is less than a preset threshold.

In a possible embodiment, the receiving module 3201 is further configured to receive the viewing instruction for the virtual assembly input by the user, and the display module 3202 is configured to display the virtual assembly in multiple perspectives in response to the viewing instruction.

In a possible embodiment, the receiving module 3201 is further configured to receive a mapping operation of the user on the substrate to display a map on the substrate.

The apparatus of this embodiment corresponds to the technical solution that may be used to implement the above method embodiments, and the implementation principle of the apparatus is similar to the technical effect and is not repeated herein.

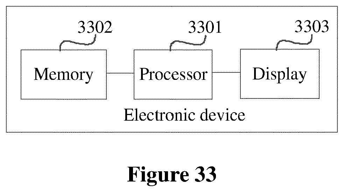

Figure 33 is a schematic structural diagram of an electronic device according to the present disclosure. The electronic device of this embodiment includes: a processor 3301, a memory 3302, and a display 3303. The processor 3301 is configured to execute a computer program stored in the memory 3302. The computer program, when executed by the processor 3301, implements any implementation of the method for constructing the virtual assembly according to the embodiment of the present application. The display module 3303 is configured to display the user interface in the above method.

The present disclosure is to further provide a computer-readable storage medium storing a computer program thereon. The computer program, when executed by a processor, implements steps of the above method embodiments.

It should be noted that the terms "first", "second" and the like in the description are used for distinguishing an entity or operation from another entity or operation, but not intended to describe an actual relationship or order between these entities or operations. Further, the terms "include", "comprise" or any variant thereof are intended to encompass nonexclusive inclusion so that a process, method, article or device including a series of elements includes not only those elements but also other elements which have not been listed definitely or an element(s) inherent to the process, method, article or device. Unless expressively limited otherwise, a process, method, article or device limited by "comprising/including a(n) ..." does not exclude existence of another identical element in such process, method, article or device.

The above are only specific implementations of the present disclosure, so that those skilled in the art can understand or implement the present disclosure. It is obvious for those skilled in the art to make many modifications to these embodiments. The general principle defined herein may be applied to other embodiments without departing from the scope of the present disclosure.

## Claims

1. A method for constructing a virtual assembly, comprising:
receiving (S101) a cutting operation instruction input by a user on a substrate, wherein the substrate is displayed in an operation region of a user interface, and the cutting operation instruction is used to indicate a cutting path;
displaying (S103) the cutting path on the substrate, wherein the substrate is cut into at least two parts by the cutting path; and
receiving (S105) an assembly instruction input by the user to assemble the at least two parts, and displaying the virtual assembly formed by assembling the at least two parts, wherein the assembly instruction is used to indicate an assembly operation of the at least two parts,
wherein before the receiving (S105) the assembly instruction input by the user, the method further comprises:
generating and displaying identifications corresponding to the at least two parts based on a cut and generation order of the at least two parts.

2. The method according to claim 1, wherein before the receiving the cutting operation instruction input by the user on the substrate, the method further comprises:
receiving (S100) attribute information of the substrate input by the user on the user interface, and displaying a substrate corresponding to the attribute information in the operation region.

3. The method according to claim 1, wherein before the receiving the cutting operation instruction input by the user on the substrate, the method further comprises:
receiving a cutting start instruction input by the user, wherein the cutting start instruction is used to indicate an execution of the cutting operation.

4. The method according to claim 3, wherein the receiving the cutting start instruction input by the user comprises:
receiving an operation for selecting a cutting function control by the user; or
receiving an operation for selecting a key or key combination corresponding to the cutting start instruction by the user; or
receiving a first operation corresponding to the cutting start instruction input by the user on the user interface, wherein the first operation comprises: a click, sliding or an air gesture.

5. The method according to any one of claims 1 to 4, wherein the receiving the cutting operation instruction input by the user on the substrate comprises:
receiving click operations by the user on the substrate, and determining a straight line between positions corresponding to two consecutive click operations as the cutting path; or
receiving a sliding operation by the user on the substrate, and determining a sliding track corresponding to the sliding operation as the cutting path.

6. The method according to any one of claims 1 to 4, wherein before the receiving the assembly instruction input by the user, the method further comprises:
receiving an interface setting operation corresponding to the part input by the user, wherein the interface setting operation comprises: setting an installation position and/or setting an interface type.

7. The method according to claim 6, wherein the receiving the interface setting operation corresponding to the part input by the user comprises:
receiving an operation for selecting the interface setting control by the user, wherein the interface setting control corresponds to the interface type; and
receiving an adding interface operation input by the user at a first position of the parts, and displaying an interface with the interface type corresponding to the interface setting control at the first position.

8. The method according to claim 7, wherein after the displaying an interface with the interface type corresponding to the interface setting control at the first position, the method further comprises:
receiving a first operation by the user on the interface, and moving the interface from the first position to a second position, wherein the first operation is used to indicate a movement of the interface from the first position to the second position; and/or
receiving a second operation by the user on the interface, and copying the interface to a third position, wherein the second operation is used to indicate a copy of the interface to the third position.

9. The method according to claim 6, wherein the receiving the assembly instruction input by the user to assemble the at least two parts comprising:
receiving an operation for selecting the interface of the parts by the user, and performing the assembly operation on the selected interface.

10. The method according to claim 9, wherein before the performing the assembly operation on the selected interface, the method further comprises:
receiving an operation for selecting an assembly function control by the user, wherein the assembly function control is configured to indicate an execution of the assembly operation; or
determining that a time interval between operations for selecting at least two interfaces is less than a preset threshold.

11. The method according to any one of claims 1 to 4, further comprising at least one of:
receiving a mapping operation of the user on the substrate, and displaying a map on the substrate; or
receiving a viewing instruction for the virtual assembly input by the user, and displaying the virtual assembly in multiple perspectives in response to the viewing instruction.

12. An electronic device, comprising:
a processor (3301) configured to execute a computer program stored in a memory (3302),
wherein the computer program, when executed by the processor (3301), implements the steps of the method according to any one of claims 1 to 11.

13. A computer-readable storage medium storing a computer program thereon, which, when executed by a processor (3301), implements the steps of the method according to any one of claims 1 to 11.

## Patentansprüche

1. Verfahren zum Herstellen einer virtuellen Anordnung, umfassend:
Empfangen (S101) einer von einem Benutzer auf einem Substrat eingegebenen Schneidbetriebsanweisung, wobei das Substrat in einem Bedienbereich einer Benutzerschnittstelle angezeigt wird und die Schneidbetriebsanweisung verwendet wird, um einen Schneidpfad anzugeben;
Anzeigen (S103) des Schneidpfads auf dem Substrat, wobei das Substrat durch den Schneidpfad in mindestens zwei Teile geschnitten wird; und
Empfangen (S105) einer von dem Benutzer eingegebenen Anordnungsanweisung, um die mindestens zwei Teile anzuordnen, und Anzeigen der durch das Anordnen der mindestens zwei Teile gebildeten virtuellen Anordnung, wobei die Anordnungsanweisung verwendet wird, um einen Anordnungsbetrieb der mindestens zwei Teile anzugeben,
wobei das Verfahren vor dem Empfangen (S105) der von dem Benutzer eingegebenen Anordnungsanweisung weiter Folgendes umfasst:
Erzeugen und Anzeigen von Identifikationen, die den mindestens zwei Teilen entsprechen, basierend auf einer Schnitt- und Erzeugungsreihenfolge der mindestens zwei Teile.

2. Verfahren nach Anspruch 1, wobei das Verfahren vor dem Empfangen der von dem Benutzer auf dem Substrat eingegebenen Schneidbetriebsanweisung weiter Folgendes umfasst:
Empfangen (S100) von Attributinformationen zu dem Substrat, die von dem Benutzer auf der Benutzerschnittstelle eingegeben werden, und Anzeigen eines den Attributinformationen entsprechenden Substrats in dem Bedienbereich.

3. Verfahren nach Anspruch 1, wobei das Verfahren vor dem Empfangen der von dem Benutzer auf dem Substrat eingegebenen Schneidbetriebsanweisung weiter Folgendes umfasst:
Empfangen einer von dem Benutzer eingegebenen Schneidstartanweisung, wobei die Schneidstartanweisung verwendet wird, um eine Ausführung des Schneidbetriebs anzugeben.

4. Verfahren nach Anspruch 3, wobei das Empfangen der von dem Benutzer eingegebenen Schneidstartanweisung Folgendes umfasst:
Empfangen eines Betriebs zum Auswählen einer Schneidfunktionssteuerung durch den Benutzer; oder
Empfangen eines Betriebs zum Auswählen einer Taste oder Tastenkombination, die der Schneidestartanweisung entspricht, durch den Benutzer; oder
Empfangen eines ersten Betriebs, der der von dem Benutzer auf der Benutzerschnittstelle eingegebenen Schneidstartanweisung entspricht, wobei der erste Betrieb Folgendes umfasst: ein Klicken, Wischen oder eine Luftgeste.

5. Verfahren nach einem der Ansprüche 1 bis 4, wobei das Empfangen der von dem Benutzer eingegebenen Schneidbetriebsanweisung auf dem Substrat Folgendes umfasst:
Empfangen von Klickbetrieben durch den Benutzer auf dem Substrat und Bestimmen einer geraden Linie zwischen Positionen, die zwei aufeinanderfolgenden Klickbetrieben entsprechen, als den Schneidpfad; oder
Empfangen eines Wischbetriebs durch den Benutzer auf dem Substrat und Bestimmen einer dem Wischbetrieb entsprechenden Wischspur als den Schneidpfad.

6. Verfahren nach einem der Ansprüche 1 bis 4, wobei das Verfahren vor dem Empfangen der von dem Benutzer eingegebenen Anordnungsanweisung weiter Folgendes umfasst:
Empfangen eines Schnittstelleneinstellungsbetriebs, der dem von dem Benutzer eingegebenen Teil entspricht, wobei der Schnittstelleneinstellungsbetrieb Folgendes umfasst: Einstellen einer Installationsposition und/oder Einstellen eines Schnittstellentyps.

7. Verfahren nach Anspruch 6, wobei das Empfangen des Schnittstelleneinstellungsbetriebs, der dem von dem Benutzer eingegebenen Teil entspricht, Folgendes umfasst:
Empfangen eines Betriebs zum Auswählen der Schnittstelleneinstellungssteuerung durch den Benutzer, wobei die Schnittstelleneinstellungssteuerung dem Schnittstellentyp entspricht; und
Empfangen eines von dem Benutzer eingegebenen Schnittstellenhinzufügungsbetriebs an einer ersten Position der Teile und Anzeigen einer Schnittstelle mit dem Schnittstellentyp, der der Schnittstelleneinstellungssteuerung entspricht, an der ersten Position.

8. Verfahren nach Anspruch 7, wobei das Verfahren nach dem Anzeigen einer Schnittstelle mit dem Schnittstellentyp, der der Schnittstelleneinstellungssteuerung entspricht, an der ersten Position weiter Folgendes umfasst:
Empfangen eines ersten Betriebs durch den Benutzer auf der Schnittstelle und Bewegen der Schnittstelle von der ersten Position zu einer zweiten Position, wobei der erste Betrieb verwendet wird, um eine Bewegung der Schnittstelle von der ersten Position zu der zweiten Position anzugeben; und/oder
Empfangen eines zweiten Betriebs durch den Benutzer auf der Schnittstelle und Kopieren der Schnittstelle an eine dritte Position, wobei der zweite Betrieb verwendet wird, um eine Kopie der Schnittstelle an der dritten Position anzugeben.

9. Verfahren nach Anspruch 6, wobei das Empfangen der von dem Benutzer eingegebenen Anordnungsanweisung zum Anordnen der mindestens zwei Teile Folgendes umfasst:
Empfangen eines Betriebs zum Auswählen der Schnittstelle der Teile durch den Benutzer und Durchführen des Anordnungsbetriebs an der ausgewählten Schnittstelle.

10. Verfahren nach Anspruch 9, wobei das Verfahren vor dem Durchführen des Anordnungsbetriebs an der ausgewählten Schnittstelle weiter Folgendes umfasst:
Empfangen eines Betriebs zum Auswählen einer Anordnungsfunktionssteuerung durch den Benutzer, wobei die Anordnungsfunktionssteuerung dazu konfiguriert ist, eine Ausführung des Anordnungsbetriebs anzugeben; oder
Bestimmen, dass ein Zeitintervall zwischen Betrieben zum Auswählen von mindestens zwei Schnittstellen kleiner als ein voreingestellter Schwellenwert ist.

11. Verfahren nach einem der Ansprüche 1 bis 4, das weiter mindestens eines des Folgenden umfasst:
Empfangen eines Abbildungsbetriebs des Benutzers auf dem Substrat und Anzeigen einer Abbildung auf dem Substrat; oder
Empfangen einer von dem Benutzer eingegebenen Betrachtungsanweisung für die virtuelle Anordnung und Anzeigen der virtuellen Anordnung in mehreren Perspektiven als Reaktion auf die Betrachtungsanweisung.

12. Elektronische Vorrichtung, umfassend:
einen Prozessor (3301), der dazu konfiguriert ist, ein in einem Speicher (3302) gespeichertes Computerprogramm auszuführen,
wobei das Computerprogramm, wenn es von dem Prozessor (3301) ausgeführt wird, die Schritte des Verfahrens nach einem der Ansprüche 1 bis 11 implementiert.

13. Computerlesbares Speichermedium, das ein Computerprogramm darauf speichert, das, wenn es von einem Prozessor (3301) ausgeführt wird, die Schritte des Verfahrens nach einem der Ansprüche 1 bis 11 implementiert.

## Revendications

1. Procédé de construction d'un ensemble virtuel, comprenant :
la réception (S101) d'une instruction d'opération de coupe saisie par un utilisateur sur un substrat, dans lequel le substrat est affiché dans une région d'opération d'une interface utilisateur, et l'instruction d'opération de coupe est utilisée pour indiquer un chemin de coupe ;
l'affichage (S103) du chemin de coupe sur le substrat, dans lequel le substrat est coupé en au moins deux pièces par le chemin de coupe ; et
la réception (S105) d'une instruction d'assemblage saisie par l'utilisateur pour assembler les au moins deux pièces, et l'affichage de l'ensemble virtuel formé en assemblant les au moins deux pièces, dans lequel l'instruction d'assemblage est utilisée pour indiquer une opération d'assemblage des au moins deux pièces,
dans lequel avant la réception (S105) de l'instruction d'assemblage saisie par l'utilisateur, le procédé comprend en outre :
la génération et l'affichage d'identifications correspondant aux au moins deux pièces sur la base d'un ordre de coupe et de génération des au moins deux pièces.

2. Procédé selon la revendication 1, dans lequel, avant la réception de l'instruction d'opération de coupe saisie par l'utilisateur sur le substrat, le procédé comprend en outre :
la réception (S100) d'informations d'attribut du substrat saisies par l'utilisateur sur l'interface utilisateur, et l'affichage d'un substrat correspondant aux informations d'attribut dans la région d'opération.

3. Procédé selon la revendication 1, dans lequel, avant la réception de l'instruction d'opération de coupe saisie par l'utilisateur sur le substrat, le procédé comprend en outre :
la réception d'une instruction de démarrage de coupe saisie par l'utilisateur, dans lequel l'instruction de démarrage de coupe est utilisée pour indiquer une exécution de l'opération de coupe.

4. Procédé selon la revendication 3, dans lequel la réception de l'instruction de démarrage de coupe saisie par l'utilisateur comprend :
la réception d'une opération pour sélectionner une commande de fonction de coupe par l'utilisateur ; ou
la réception d'une opération pour sélectionner une touche ou une combinaison de touches correspondant à l'instruction de démarrage de coupe par l'utilisateur ; ou
la réception d'une première opération correspondant à l'instruction de démarrage de coupe saisie par l'utilisateur sur l'interface utilisateur, dans lequel la première opération comprend : un clic, un glissement ou un geste aérien.

5. Procédé selon l'une quelconque des revendications 1 à 4, dans lequel la réception de l'instruction d'opération de coupe saisie par l'utilisateur sur le substrat comprend :
la réception d'opérations de clic par l'utilisateur sur le substrat, et la détermination d'une ligne droite entre des positions correspondant à deux opérations de clic consécutives comme chemin de coupe ; ou
la réception d'une opération de glissement par l'utilisateur sur le substrat, et la détermination d'un tracé de glissement correspondant à l'opération de glissement comme chemin de coupe.

6. Procédé selon l'une quelconque des revendications 1 à 4, dans lequel, avant la réception de l'instruction d'assemblage saisie par l'utilisateur, le procédé comprend en outre :
la réception d'une opération de paramétrage d'interface correspondant à la pièce saisie par l'utilisateur, dans lequel l'opération de paramétrage d'interface comprend : le paramétrage d'une position d'installation et/ou le paramétrage d'un type d'interface.

7. Procédé selon la revendication 6, dans lequel la réception de l'opération de paramétrage d'interface correspondant à la pièce saisie par l'utilisateur comprend :
la réception d'une opération pour sélectionner la commande de paramétrage d'interface par l'utilisateur, dans lequel la commande de paramétrage d'interface correspond au type d'interface ; et
la réception d'une opération d'interface d'ajout saisie par l'utilisateur au niveau d'une première position des pièces, et l'affichage d'une interface avec le type d'interface correspondant à la commande de paramétrage d'interface à la première position.

8. Procédé selon la revendication 7, dans lequel, après l'affichage d'une interface avec le type d'interface correspondant à la commande de paramétrage d'interface à la première position, le procédé comprend en outre :
la réception d'une première opération par l'utilisateur sur l'interface, et le déplacement de l'interface de la première position à une deuxième position, dans lequel la première opération est utilisée pour indiquer un mouvement de l'interface de la première position à la deuxième position ; et/ou
la réception d'une seconde opération par l'utilisateur sur l'interface, et la copie de l'interface vers une troisième position, dans lequel la seconde opération est utilisée pour indiquer une copie de l'interface vers la troisième position.

9. Procédé selon la revendication 6, dans lequel la réception de l'instruction d'assemblage saisie par l'utilisateur pour assembler les au moins deux pièces comprend :
la réception d'une opération de sélection de l'interface des pièces par l'utilisateur, et l'exécution de l'opération d'assemblage sur l'interface sélectionnée.

10. Procédé selon la revendication 9, dans lequel, avant d'effectuer l'opération d'assemblage sur l'interface sélectionnée, le procédé comprend en outre :
la réception d'une opération pour sélectionner une commande de fonction d'assemblage par l'utilisateur, dans lequel la commande de fonction d'assemblage est configurée pour indiquer une exécution de l'opération d'assemblage ; ou
la détermination qu'un intervalle de temps entre les opérations pour sélectionner au moins deux interfaces est inférieur à un seuil prédéfini.

11. Procédé selon l'une quelconque des revendications 1 à 4, comprenant en outre au moins l'une parmi :
la réception d'une opération de cartographie de l'utilisateur sur le substrat, et l'affichage d'une carte sur le substrat ; ou
la réception d'une instruction de visualisation pour l'ensemble virtuel saisie par l'utilisateur, et l'affichage de l'ensemble virtuel dans de multiples perspectives en réponse à l'instruction de visualisation.

12. Dispositif électronique, comprenant :
un processeur (3301) configuré pour exécuter un programme informatique stocké dans une mémoire (3302),
dans lequel le programme informatique, lorsqu'il est exécuté par le processeur (3301), met en œuvre les étapes du procédé selon l'une quelconque des revendications 1 à 11.

13. Support de stockage lisible par ordinateur stockant un programme informatique sur celui-ci, qui, lorsqu'il est exécuté par un processeur (3301), met en œuvre les étapes du procédé selon l'une quelconque des revendications 1 à 11.
